(19) Europäisches Patentamt
European Patent Office
Office européen des brevets

(11) **EP 0 843 589 B1**

(12) **FASCICULE DE BREVET EUROPEEN**

(45) Date de publication et mention
de la délivrance du brevet:
**02.01.2004 Bulletin 2004/01**

(21) Numéro de dépôt: **97920773.5**

(22) Date de dépôt: **16.04.1997**

(51) Int Cl.7: **B01F 3/08**, C08J 3/03

(86) Numéro de dépôt international:
**PCT/FR1997/000690**

(87) Numéro de publication internationale:
**WO 1997/038787 (23.10.1997 Gazette 1997/45)**

(54) **PROCEDE DE PREPARATION D'UNE EMULSION**

HERSTELLUNGSVERFAHREN FüR EMULSIONEN

EMULSION MANUFACTURING PROCESS

(84) Etats contractants désignés:
**AT BE CH DE ES FR GB GR IE IT LI LU NL PT SE**

(30) Priorité: **16.04.1996 FR 9604736**

(43) Date de publication de la demande:
**27.05.1998 Bulletin 1998/22**

(73) Titulaire: **CENTRE NATIONAL DE
LA RECHERCHE SCIENTIFIQUE (CNRS)
75016 Paris (FR)**

(72) Inventeurs:
• **BIBETTE, Jérome, Michel, Jacques
F-33000 Bordeaux (FR)**

• **MASON, Thomas
F-33170 Gradignan (FR)**

(74) Mandataire: **Bernasconi, Jean Raymond et al
c/o Cabinet Lavoix,
2, Place d'Estienne d'Orves
75441 Paris Cedex 09 (FR)**

(56) Documents cités:
**EP-A- 0 200 009         EP-A- 0 463 431
GB-A- 2 117 666         US-A- 3 565 817
US-A- 4 177 177**

• **PATENT ABSTRACTS OF JAPAN vol. 16, no. 342
& JP 04 103632 A (SHIN ETSU CHEM CO LTD), 6
Avril 1992,**

Printed by Jouve, 75001 PARIS (FR)

**Description**

L'invention concerne un procédé de préparation d'une émulsion constituée de gouttelettes d'une phase A, dispersées dans une phase B, les phases A et B n'étant pas miscibles.

Le procédé de l'invention est plus particulièrement utile pour la préparation d'émulsions monodisperses.

Le procédé de l'invention est également applicable à la préparation d'émulsions à faible teneur en tensioactif.

De nombreuses techniques d'émulsification sont connues à ce jour. Parmi les plus courantes, on peut citer les techniques de microfluidisation et d'ultrasonication.

La microfluidisation consiste à projeter sous haute pression un jet liquide constitué de deux fluides non miscibles sur une paroi solide. Les turbulences et cavitations ainsi induites conduisent à la dispersion d'un fluide dans l'autre.

L'ultrasonication permet la dispersion d'un fluide donné dans un autre fluide formant la phase continue et non dispersible dans le premier. Par ce procédé, on soumet un mélange des deux fluides à des vibrations ultrasoniques de grande intensité qui créent les phénomènes de cavitation entraînant la dispersion d'un fluide dans l'autre.

Les demandes de brevet européennes EP 442 831 et EP 517 987 divulguent par ailleurs des procédés de préparation d'émulsions monodisperses du type huile-dans-l'eau ou polymère magnétisable-dans-l'eau. Ces procédés comprennent les étapes consistant à :

a) ajuster la teneur en huile respectivement en polymère d'une émulsion stable primaire polydisperse à une valeur comprise entre 1 et 40% en poids;
b) augmenter la concentration en tensioactif de l'émulsion primaire polydisperse de façon à obtenir deux phases, une phase dite liquide où les gouttelettes d'huile, respectivement de polymère sont libres et une phase dite solide où les gouttelettes sont associées;
c) séparer la phase liquide de la phase solide; et
d) recommencer éventuellement les opérations

a) à c) ci-dessus autant de fois qu'il est nécessaire pour obtenir l'émulsion monodisperse.

Ces procédés impliquent le fractionnement d'une émulsion primaire de départ par crémages successifs.

Il va sans dire que ces deux premiers procédés longs et fastidieux ne sont pas facilement industrialisables.

L'invention propose un procédé de préparation d'une émulsion au départ d'une émulsion primaire simple constituée de deux phases non miscibles, lequel est particulièrement adapté au milieu industriel et dont la mise en oeuvre est particulièrement aisée.

Plus précisément, l'invention fournit un procédé de préparation d'une émulsion secondaire constituée de gouttelettes d'une phase A, dispersées dans une phase B, A n'étant pas miscible dans B, au départ d'une émulsion primaire polydisperse de formulation identique et constituée de gouttelettes de ladite phase A dispersées dans ladite phase B, selon la revendication 1.

Dans le contexte de la présente demande, on entend par émulsion primaire, l'émulsion de départ utilisée pour produire l'émulsion cible, désignée par émulsion secondaire.

On notera que selon l'invention les formulations de l'émulsion primaire de départ et de l'émulsion cible secondaire sont identiques, ce qui signifie en d'autres termes que ces émulsions contiennent les mêmes ingrédients dans des quantités égales.

Selon un mode réalisation préféré de l'invention, l'émulsion primaire est simple: dans ce cas, elle est constituée d'une première phase homogène en dispersion dans une seconde phase homogène, dite phase continue, lesdites première et seconde phases étant par définition non miscibles.

Cependant il est possible de mettre en oeuvre le procédé de l'invention au départ d'une émulsion double constituée de gouttelettes d'une émulsion ou d'une dispersion donnée dans une phase continue homogène.

Comme exemple d'émulsions doubles, on peut citer les émulsions de type eau-dans-l'huile-dans-l'eau.

Partant de telles émulsions doubles, on aboutit à une émulsion secondaire du même type, c'est-à-dire une émulsion double.

Le procédé de l'invention est applicable quelle que soit la nature des phases dispersées et continue, la caractéristique essentielle étant la non-miscibilité de ces deux phases dans les conditions d'émulsification, et notamment, dans des conditions données de température et de pH.

De fait, selon l'invention, le terme phase englobe à la fois les corps purs et les solutions colloïdales ou fluides complexes. On peut ainsi envisager une émulsion primaire de type eau-dans-l'huile ou huile-dans-l'eau.

Toutefois, selon un mode de réalisation préféré l'émulsion primaire est une émulsion de type huile-dans-l'eau.

Par "huile", on entend selon l'invention toute substance hydrophobe, insoluble ou très peu soluble dans l'eau, susceptible d'être mise en émulsion aqueuse stable du type huile dans eau, éventuellement à l'aide d'un tensioactif. Une telle substance hydrophobe et insoluble peut être par exemple un polymère organique tel qu'un polyéthylèneglycol, un poly(acide acrylique) ou un polyorganosiloxane, un latex organique, une huile minérale, de l'hexadécane, des cristaux liquides (lyotropiques ou thermotropiques).

Les polyorganosiloxanes, ou silicone, sont des polymères organosilylés comprenant des liaisons Si-O-Si.

On sait mettre en émulsions aqueuses pratiquement toutes les silicones qui se présentent sous forme de polymères fluides plus ou moins visqueux, ou solides à température ambiante.

Les polymères silicones sont linéaires, cycliques ou ramifiés. Les polymères très ramifiés sont également dénommés résines. Ils peuvent se présenter sous forme de fluides plus ou moins visqueux ou de solides.

Les polydiorganosiloxanes sont des polymères sensiblement linéaires qui se présentent sous forme de fluides plus ou moins visqueux allant des huiles peu visqueuses jusqu'aux gommes.

Le procédé selon l'invention est avantageusement applicable aux émulsions silicones dont la silicone est un polydiorganosiloxane sensiblement linéaire bloqué à chacune de ses extrémités par une fonction silanol ou par un radical triorganosiloxyle et dont la viscosité à 25°C est généralement comprise entre 25 mPa.s et $30 \times 10^6$ mPa.s.

Le polydiorganosiloxane peut donc être indifféremment une huile visqueuse et une gomme. Les radicaux organiques liés au silicium sont des radicaux hydrocarbonés monovalents généralement choisis parmi les radicaux alkyle en $C_1$-$C_{15}$, phényle, vinyle et l'atome d'hydrogène.

On préfère néanmoins que la silicone soit un polydiméthylsiloxane.

Il doit être entendu que selon l'invention les phases dispersée A et continue B peuvent être constituées d'un ou plusieurs composés chimiques différents : Par exemple de façon à améliorer la stabilité d' émulsions huile-dans-l'eau, il peut être nécessaire d'ajouter à la phase aqueuse un ou plusieurs tensio-actifs, de préférence non ionique ou anionique, mais également cationiques, zwitterioniques ou amphotères.

On notera qu'au départ d'une émulsion primaire stable, le procédé de l'invention conduit à une émulsion secondaire stable.

Lorsque l'émulsion est préparée à partir d'huile et d'eau en présence d'un ou plusieurs tensioactifs, on préfère que le ou les tensioactifs constituent de 20 à 40% du poids de la phase aqueuse.

Ces tensioactifs sont bien connus de l'homme de métier et sont en particulier décrits dans les brevets américains US-A-2 891 920, US-A-3 294 725, US-A-3 360 491, US-A-3 983 148 et le brevet français FR-A-2 605 634 cités comme référence.

Les agents tensio-actifs anioniques sont choisis parmi les alkylbenzènesulfonates de métaux alcalins, alkylsufates de métaux alcalins tel que le dodécylsulfate de sodium, les alkyléthersulfates de métaux alcalins, les alkylaryléthersulfates de métaux alcalins et les dioctylsulfosuccinates de métaux alcalins.

Les agents tensio-actifs cationiques utilisés conformément à l'invention, sont choisis parmi les halogénures de dialkyl($C_{10}$-$C_{30}$)benzyldiméthylammonium et les sels d'ammonium quaternaires polyéthoxylés.

Les agents tensioactifs amphotères utilisés conformément à l'invention sont choisis parmi N-alkyl ($C_{10}$-$C_{22}$)bétaines, les N-alkyles ($C_{10}$ -$C_{22}$ )amidobétaines, les alkyl($C_{10}$-$C_{22}$)imidazolines et les dérivés de l'asparagine.

Les agents tensioactifs non ioniques sont choisis parmi les acides gras polyéthoxylés, les esters de sorbitan, les esters de sorbitan polyéthoxylés, les alkylphénols polyéthoxylés, les alcools gras polyéthoxylés, les amides gras polyéthoxylés ou polyglycérolés, les alcools et alphadiols polyglycérolés.

De même, l'huile peut être constituée d'une ou plusieurs substances hydrophobes insolubles ou très peu solubles dans l'eau.

Selon l'invention, il est essentiel que l'émulsion primaire de départ soit viscoélastique. Il doit être entendu que les propriétés viscoélastiques caractérisent l'émulsion dans son ensemble : en d'autres termes, il s'agit d'une viscoélasticité effective.

Le terme viscoélastique a la signification qui lui est généralement attribuée dans la technique. De manière générale, un matériau est dit viscoélastique lorsque sous l'effet d'un cisaillement il présente à la fois les caractéristiques d'un matériau purement élastique, c'est-à-dire qu'il est capable de stocker de l'énergie, ainsi que les caractéristiques d'un matériau purement visqueux, c'est-à-dire qu'il est également capable de dissiper de l'énergie.

Selon l'invention, le domaine de viscoélasticité est délimité par les équations (1) et (2) suivantes figurant les variations du module élastique G' et du module de dissipation G" :

(1) $1.10^{-2}$ dyne/cm$^2$ $(1.10^{-3}$ N/m$^2)$ $\leq (G'^2 + G''^2)^{+\frac{1}{2}} \leq$ $1.10^8$ dyne/cm$^2$ $(1.10^7$ N/m$^2)$. G'
(2)

$$\frac{G'}{G''} \geq 0,01$$

G' et G" étant mesurés au taux de cisaillement maximal auquel on entend soumettre l'émulsion primaire.

De manière préférée, les modules G' et G" satisfont les équations suivantes (3) et (4).
(3) 1 dyne/cm$^2$ $(1.10^{-1}$ N/m$^2)$ $\leq (G'^2 + G''^2)^{+\frac{1}{2}} \leq 1.10^4$ dyne/cm$^2$ $(1.10^3$ N/m$^2)$
(4)

$$0,1 \leq \frac{G'}{G''} \leq 10$$

La viscoélasticité effective de l'émulsion dépend de différents paramètres. Parmi ceux-ci on peut mentionner la viscoélasticité de la phase continue et la proportion des gouttes en dispersion dans la phase continue.

Suivant la nature des phases en présence et leur proportion respective, l'homme du métier pourra donc jouer sur l'un ou l'autre de ces paramètres, éventuellement les deux, pour aboutir à la viscoélasticité effective souhaitée et ceci à l'aide de ses seules connaissances générales de la technique.

Selon l'invention, la viscoélasticité effective de l'émulsion primaire est obtenue en sélectionnant une phase continue viscoélastique.

Dans le cas d'émulsions huile-dans-l'eau, la viscoélasticité de la phase aqueuse peut être obtenue par incorporation d'un ou plusieurs additifs, tels que des tensioactifs.

Cependant, dans le cas où l'on souhaite limiter la quantité de tensioactif ou bien lorsque la nature du tensioactif est telle que l'émulsion résultante ne présente pas les caractéristiques souhaitées de viscoélasticité, il est possible d'incorporer un additif supplémentaire éventuellement dépourvu de propriétés de surface mais efficace du point de vue de son activité épaississante.

Comme exemple de tel constituant, on peut citer le dextran.

En variante, en vue d'atteindre les caractéristiques souhaitées de viscoélasticité effective de l'émulsion, il est possible d'augmenter la quantité de phase dispersée : dans ce cas, la proportion de phase dispersée sera d'au moins 65% en poids par rapport au poids total de l'émulsion, de préférence d'au moins 80%.

On notera que lorsque l'émulsion primaire est telle que sa phase continue est elle-même viscoélastique, ou lorsque la proportion de phase dispersée est d'au moins 65% en poids par rapport à la masse totale de l'émulsion, la quantité de tensioactif ajoutée peut être nulle et n'est généralement pas supérieure à 5% en poids par rapport à la masse totale de l'émulsion.

Ainsi, le procédé de l'invention permet la préparation d'émulsions contenant moins de 5% de tensioactif.

Selon le procédé de l'invention, les gouttelettes de l'émulsion secondaire ont un diamètre inférieur au plus petit diamètre des gouttelettes de l'émulsion polydisperse de départ.

Le diamètre des gouttelettes de l'émulsion secondaire dépend donc du diamètre des gouttelettes de l'émulsion de départ. Suivant l'application envisagée de l'émulsion secondaire, il conviendra de sélectionner l'émulsion primaire de départ de telle sorte que la dimension des gouttelettes de l'émulsion primaire soit supérieure à la taille des gouttelettes de l'émulsion cible laquelle est déterminée par le domaine d'application.

De manière générale, les gouttelettes de l'émulsion primaire de départ ont un diamètre variant entre 1 et 100 μm, de préférence entre 10 et 100 μm.

La taille des gouttelettes de l'émulsion primaire de départ peut être contrôlée de façon connue en soi lors de sa préparation en ajustant les conditions opératoires.

L'émulsion primaire de départ est facilement préparée par l'homme du métier à l'aide des procédés d'émulsification conventionnels, connus dans la technique qui conduisent à des émulsions polydisperses, de telles émulsions étant caractérisées par une distribution large du diamètre des gouttelettes.

De façon avantageuse, l'émulsion primaire est préparée en ajoutant goutte-à-goutte l'une des deux phases à la phase continue sous agitation constante. Par mise en oeuvre de ce procédé, il est possible de contrôler le diamètre minimal seuil des gouttelettes constituant l'émulsion primaire en ajustant la vitesse d'introduction des gouttes de la première phase dans la phase continue par rapport à la vitesse d'agitation de la phase continue. De manière préférée, on maintiendra pendant toute la durée de l'addition le rapport de la fréquence d'introduction des gouttes au volume de la phase continue à une valeur 10 à 100 fois inférieure à la vitesse d'agitation de la phase continue.

Les dispositifs utilisables pour agiter la phase continue lors de la préparation de l'émulsion primaire sont variés. On préfère néanmoins les agitateurs mécaniques à cisaillement dont la géométrie assure une certaine homogénéité du taux de cisaillement. En vue d'empêcher la formation de gouttelettes de trop faibles dimensions, il convient en effet d'éviter des trop grandes inhomogénéités des taux de cisaillement appliqués.

Par ce procédé, on obtient une émulsion primaire polydisperse présentant une viscosité moyenne uniforme, désignée ici par viscosité effective uniforme.

Le procédé de l'invention consiste à soumettre une émulsion primaire viscoélastique à un cisaillement contrôlé de telle sorte qu'un même cisaillement maximal soit appliqué à l'ensemble de l'émulsion.

Pour ce faire, on peut envisager de soumettre l'ensemble de l'émulsion à un taux de cisaillement constant.

Cependant, l'invention n'entend pas se limiter à ce mode de réalisation particulier.

De fait, le taux de cisaillement peut être distinct, à un temps donné, pour deux points de l'émulsion.

En variant la géométrie du dispositif utilisé pour générer les forces de cisaillement, il est possible de moduler le taux de cisaillement appliqué à l'émulsion dans le temps ou/et dans l'espace.

Pour autant que l'émulsion soit en écoulement lorsque soumise au cisaillement, chaque partie de l'émulsion peut être ainsi soumise à un taux de cisaillement qui varie dans le temps. Le cisaillement est dit contrôlé lorsque quelle que soit la variation dans le temps du taux de cisaillement, celui-ci passe par une valeur maximale qui est la même pour toutes les parties de l'émulsion, à un instant donné qui peut différer d'un endroit à l'autre de l'émulsion.

De manière préférée, de façon à contrôler le cisaillement, on introduit l'émulsion primaire dans un dispositif approprié. Ce dispositif peut présenter des configurations variées. La configuration exacte n'est pas essentielle selon l'invention dès lors qu'en sortie de ce dispositif l'ensemble de l'émulsion a été soumis au même cisaillement maximal.

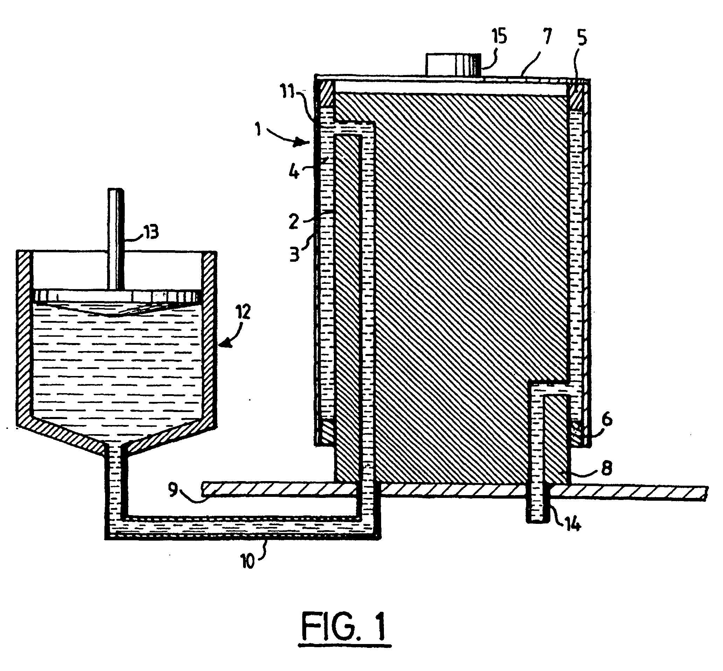

Les Figures 1 à 5 schématisent les trois types de dispositifs utilisés dans le cadre de l'invention.

La Figure 1 est une vue en coupe d'une cellule dite de Couette 1; celle-ci est constituée de deux cylindres concentriques 2 et 3 en rotation constante l'un par rapport à l'autre. Sur la Figure 1, le cylindre interne 2 est immobile alors que le cylindre externe 3 est animé d'un mouvement de rotation uniforme par rapport à un axe d'entraînement 15. Les cylindres concentriques 2 et 3 délimitent une enceinte 4 annulaire. Aux extrémités supérieure et inférieure de l'enceinte 4 sont disposés deux roulements à billes étanches 5 et 6 annulaires. Un couvercle 7 dont les dimensions correspondent à celles du cylindre externe 3 ferme la partie supérieure du dispositif 1.

Les cylindres 2 et 3 concentriques sont décalés l'un par rapport à l'autre dans le sens de la longueur de telle sorte que la partie inférieure 8 du cylindre interne repose sur un support plan 9.

La cellule de Couette 1 représentée sur la Figure 1 comprend également un conduit d'alimentation 10 en émulsion primaire qui traverse le support 9 et débouche dans la partie supérieure 11 de l'enceinte 4. L'autre extrémité du conduit d'alimentation est reliée à un réservoir 12 contenant l'émulsion primaire. Le débit d'alimentation en émulsion primaire est contrôlé par un piston 13. La partie inférieure de l'enceinte 4 diamétralement opposée au point 11 est munie d'une conduite d'évacuation 14 de l'émulsion secondaire laquelle traverse le support plan 9.

Le dispositif de la figure 1 permet la préparation en continu de l'émulsion secondaire cible. En cours de production, l'enceinte 4 est alimentée en continu en émulsion primaire par la conduite 10. L'émulsion primaire circule dans l'enceinte 4 tout en étant soumise à des forces de cisaillement engendrées par la rotation uniforme du cylindre externe 3 sur lui-même.

Dans un tel dispositif l'émulsion primaire est soumise à un taux de cisaillement constant, le taux de cisaillement étant défini ici comme le rapport de la vitesse linéaire au point de contact avec la surface du cylindre externe 3 à la différence $(R_3-R_2)$ où $R_2$ et $R_3$ sont respectivement les rayons des cylindres interne 2 et externe 3.

Lorsque l'émulsion est récupérée au sortir du conduit d'évacuation 14, celle-ci a les caractéristiques de l'émulsion secondaire cible.

Dans le cas où un fonctionnement en discontinu est souhaité, il suffit d'introduire via le conduit d'alimentation 10 un volume déterminé de l'émulsion primaire.

De façon générale, le débit d'alimentation en émulsion primaire sera maintenu suffisamment bas de telle sorte que la valeur du taux de cisaillement dans le sens de l'écoulement soit bien inférieure au taux de cisaillement engendré par la rotation uniforme du cylindre externe 3 tel que défini ci-dessus.

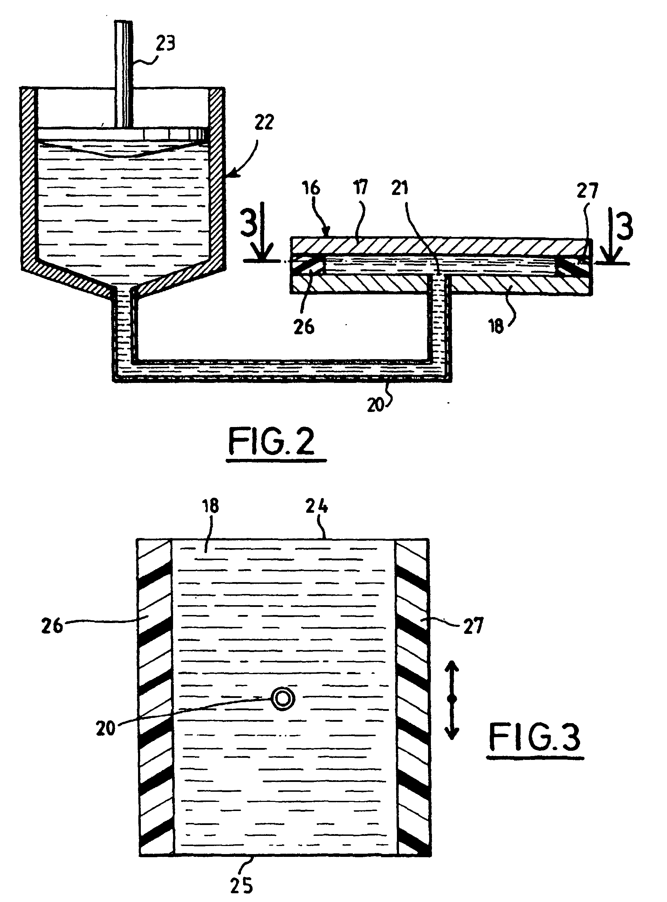

La Figure 2 est une vue en coupe d'un second dispositif 16 pour l'application des forces de cisaillement; la Figure 3 est une vue suivant l'axe 3-3 de la Figure 2 de ce même dispositif. Le dispositif 16 est constitué de deux plaques parallèles de dimensions identiques 17 et 18 en mouvement oscillant l'une par rapport à l'autre. Sur la Figure 2, la plaque supérieure 17 est animé d'un mouvement de va-et-vient par rapport à la plaque inférieure 18 qui est immobile. Ce mouvement de va-et-vient a lieu dans une direction parallèle aux deux plaques 17 et 18: la direction exacte du mouvement est indiquée Figure 3 par la double flèche.

Les deux plaques 17 et 18 délimitent une enceinte 19 dans laquelle circule l'émulsion primaire.

L'enceinte 19 est fermée à deux de ses extrémités par deux joints étanches en téflon 26 et 27 de forme parallélépipèdique jouant le rôle d'espaceurs entre les deux plaques 17 et 18.

Le dispositif 16 des Figures 2 et 3 comprend également une conduite d'alimentation 20 en émulsion primaire laquelle traverse la plaque inférieure 18 et débouche dans la partie centrale 21 de l'enceinte 19. L'autre extrémité de la conduite 20 est reliée à un réservoir 22 contenant l'émulsion primaire. Le débit d'alimentation en émulsion primaire est contrôlé par un piston 23.

Le dispositif 16 est également adapté pour la préparation en continu de l'émulsion secondaire cible. En cours de production, l'enceinte 19 est alimenté en continu en émulsion primaire par la conduite 20. L'émulsion primaire circule de la partie centrale 21 de l'enceinte 19 vers les bords latéraux 24 et 25 de l'enceinte 19 (représentés sur la Figure 3) tout en étant soumise à des forces de cisaillement engendrées par le mouvement oscillant de la plaque 17.

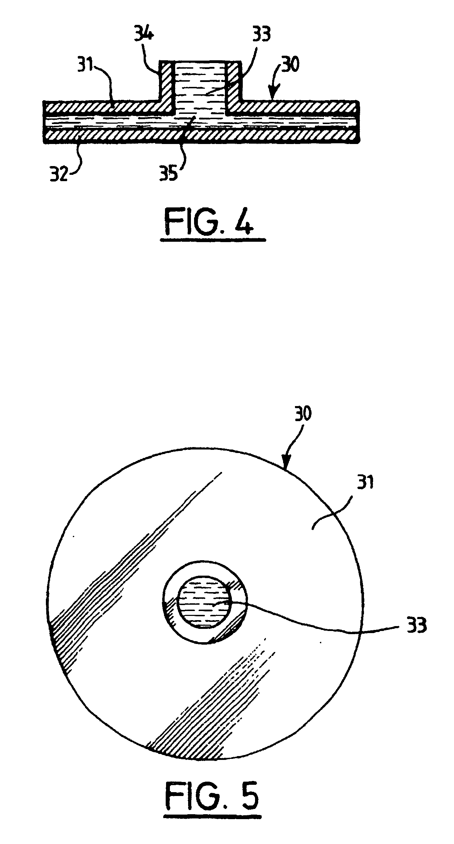

Sur les Figures 4 et 5 est représenté un dispositif 30 également utilisable selon l'invention. Ce dispositif est constitué de deux disques concentriques 31 et 32 délimitant une enceinte 33 dans laquelle circule l'émulsion primaire. La Figure 4 est une vue en coupe du dispositif 30, alors que la Figure 5 est une vue de dessus de ce même dispositif 30. Sur les Figures 4 et 5, le disque supérieur 31 est immobile, alors que le disque inférieur 32 est animé d'un mouvement uniforme de rotation autour de son axe. Le dispositif 30 comprend une conduite d'alimentation 34 en émulsion primaire laquelle traverse le disque supérieur 31 et débouche dans la partie centrale 35 de l'enceinte 33. L'autre extrémité de la conduite 34 est reliée à un réservoir contenant l'émulsion primaire, non représenté sur les Figures 4 et 5.

Le dispositif 30 des Figures 4 et 5 est également conçu pour la production en continu de l'émulsion secondaire cible.

En cours de production, l'enceinte 33 est alimentée en émulsion primaire par la conduite 34. L'émulsion primaire circule de la partie centrale 35 de l'enceinte 33 vers la périphérie de l'enceinte 33 où l'émulsion secondaire est recueillie.

Dans un tel dispositif, le taux de cisaillement auquel est soumise l'émulsion primaire n'est pas constant mais croît linéairement en fonction de la distance à l'axe de rotation et de la fréquence de rotation. Toutefois, l'ensemble de l'émulsion est soumise, lors de sa progression dans ce dispositif à une même variation du taux de cisaillement.

Un autre type de dispositif est la cellule de type plan/cône , où un cône dont la pointe est dirigée vers un plan, et dont l'axe est perpendiculaire à ce plan, tourne à une vitesse angulaire constante à distance du plan.

Ces cellules sont couramment utilisées dans des appareils commerciaux, en particulier des rhéomètres permettant de mesurer les propriétés viscoélastiques de liquides (par exemple : CARRIMED ou RHEOMETRICS).

Dans chacun de ces dispositifs la nature du matériau constituant les cylindres, disques et plaques en mouvement, directement en contact avec l'émulsion à traiter n'est pas essentielle selon l'invention.

Toutefois, ce matériau est choisi de façon à ne pas induire la coalescence des gouttelettes de l'émulsion à la surface desdits cylindres, disques et plaques. Une telle coalescence provoquerait l'apparition d'une couche de glissement propre à réduire et éventuellement faire disparaître les forces de cisaillement nécessaires à la formation de l'émulsion secondaire. Comme exemples de matériaux appropriés, on peut citer le verre, le plexiglass [R], le titane, l'acier inoxydable et l'aluminium.

Dans les dispositifs utilisés pour générer les forces de cisaillement, les surfaces en mouvement peuvent être indifféremment lisses, rugueuses, ondulées ou présenter des cavités plus ou moins importantes.

La température est un paramètre qui peut avoir une influence considérable sur la viscosité des phases continue et dispersée. Elle peut également réduire la stabilité des gouttelettes de l'émulsion.

Les contraintes de cisaillement générées par les dispositifs décrits ci-dessus n'entraînent généralement pas d'importantes fluctuations de la température. Par prudence, il peut être utile cependant de thermostater les dispositifs à cisaillement mécanique utilisés.

La valeur maximale du taux de cisaillement auquel est soumise l'émulsion primaire dépend de la fréquence de rotation, de la fréquence d'oscillation et/ou de l'amplitude d'oscillation du mouvement des plaques, cylindres et disques des dispositifs décrits ci-dessus.

De façon générale, on a constaté qu'une valeur élevée du taux maximal de cisaillement conduit à la formation d'émulsions constituées de gouttelettes de très petite dimension et présentant une distribution granulométrique très étroite.

De façon à augmenter la valeur du taux de cisaillement maximal, l'homme du métier peut jouer sur plusieurs paramètres, à savoir la fréquence de rotation, la fréquence d'oscillation et/ou l'amplitude d'oscillation du mouvement des plaques, cylindres et disques des dispositifs décrits ci-dessus, ainsi que sur la dimension des enceintes respectives de ces différents dispositifs dans la direction perpendiculaire au sens de l'écoulement imposé par le mouvement de la surface.

Cependant lorsque la viscoélasticité effective de l'émulsion est très importante par exemple dans le cas d'une émulsion primaire très concentrée en phase dispersée et dont la phase continue est elle-même viscoélastique, il est préférable de réduire la dimension de l'enceinte. En effet, une augmentation de l'amplitude d'oscillation et/ou de la fréquence du mouvement pourrait entraîner un écoulement hétérogène (par formation de fractures), ce qui est à éviter.

On notera que le taux maximal de cisaillement varie de façon linéaire avec l'amplitude d'oscillation et/ou la fréquence du mouvement et de façon inversement proportionnelle avec la dimension de l'enceinte dans une direction perpendiculaire à l'écoulement.

De façon générale le taux maximal de cisaillement est compris entre 1 et $1.10^6$ s$^{-1}$.

De manière préférée cependant le taux maximal de cisaillement est situé dans l'intervalle 100-5000 s$^{-1}$, mieux encore 500-5000 s$^{-1}$.

Le procédé de l'invention permet la préparation d'émulsions monodisperses.

Il doit être entendu que par émulsion monodisperse, on entend selon l'invention une émulsion constituée de gouttelettes dispersées dans une phase continue caractérisées par une distribution granulométrique très étroite. Dans le cas d'une distribution du type de Gauss dans laquelle on aura représenté les variations du volume occupé par la matière dispersée en fonction du diamètre des gouttelettes, on considèrera que la distribution est très étroite lorsque l'écart type est inférieur ou égal à 30%, et de préférence de l'ordre de 5 à 25%.

En vue d'aboutir à une émulsion secondaire monodisperse, un certain nombre de conditions doivent être réunies :

(i) La phase continue de l'émulsion doit être viscoélastique.

(ii) La viscosité effective de l'émulsion primaire de départ doit être supérieure à la viscosité de la phase dispersée A, lesdites viscosités étant mesurées à bas taux de cisaillement, de préférence entre 10 et 100s$^{-1}$. De manière préférée, la viscosité de la phase continue B est en outre supérieure à la viscosité de la phase dispersée A, lesdites viscosités étant mesurées à bas taux de cisaillement, c'est à dire entre 10 et 100s$^{-1}$.

(iii) Pour autant que l'émulsion est en écoulement lorsque soumise au cisaillement contrôlé, cet écoulement doit être homogène, par opposition à un écoulement hétérogène avec effets de fracture.

Plus précisément lorsque le cisaillement contrôlé est réalisé par mise en contact de ladite émulsion avec une surface solide en mouvement, un écoulement homogène est caractérisé par un gradient de vitesse constant dans une direction perpendiculaire à la surface solide en mouvement.

Un moyen de contrôler l'écoulement consiste à jouer sur la dimension des enceintes dans la direction perpendiculaire au sens de l'écoulement imposé par le mouvement de la surface.

On notera que, dans le cas du dispositif de la Figure 1, cette dimension est définie par la différence $(R_3-R_2)$. Dans le cas de la Figure 2, cette dimension est définie par la distance séparant les deux plaques parallèles dans une direction qui leur est perpendiculaire. Dans le cas de la Figure 4, cette dimension est définie par la distance séparant les deux disques dans la direction de l'axe de rotation du disque inférieur.

De façon générale, un écoulement hétérogène peut être rendu homogène par réduction de la taille de l'enceinte et plus particulièrement par réduction de sa dimension dans la direction perpendiculaire au sens de l'écoulement.

Ainsi, on a pu constater que pour des émulsions de type huile-dans-l'eau et dans le cas des dispositifs schématisés Figures 1 à 5, cette dimension est préférablement maintenue au-dessous de 200 μm.

Le procédé de l'invention permet de préparer des émulsions secondaires dont la taille des gouttelettes est comprise entre 0,05 et 50 μm, de préférence entre 0,1 et 10 μm.

La valeur du diamètre des gouttelettes de l'émulsion obtenue peut être mesurée par mise en oeuvre de l'une quelconque des méthodes connues de l'art antérieur : deux de ces méthodes sont couramment utilisées dans la technique. La première est la microscopie à contraste de phase, la seconde est la granulométrie laser. Une troisième méthode appropriée au cas d'émulsions constituées d'au moins 65% en poids de phase dispersée consiste à remplir de l'émulsion secondaire une cellule permettant la transmission d'au moins 80% de la lumière incidente. En envoyant un faisceau laser à travers la cellule et en plaçant un écran sur le trajet après la cellule on remarque un anneau de diffusion dont la position donne directement le diamètre moyen 2a des gouttelettes en utilisant la formule classique :

$$2a = 2\lambda . \ (n.\sin\theta/2)^{-1}$$

θ étant l'angle formé par la position de l'anneau et le faisceau initial,
λ étant la longueur d'onde de la lumière, et
n étant d'indice de réfraction du milieu.

Il résulte de la présente description que le procédé de l'invention peut être utilisé soit en vue de préparer des émulsions monodisperses à distribution granulométrique resserrée, soit en vue de préparer des émulsions contenant un très faible pourcentage de tensioactif, et par exemple jusqu'à moins de 5% en poids de tensioactif par rapport au poids total de l'émulsion.

Le procédé de l'invention trouve des applications dans de nombreux domaines.

Dans les domaines pharmaceutique et cosmétologique, les émulsions secondaires monodisperses résultant du procédé de l'invention sont particulièrement utiles. Du point de vue de la formulation galénique, on sait en effet que le passage transdermique de certains principes actifs est accéléré lorsque ceux-ci sont vectorisés dans les gouttelettes d'une émulsion à distribution granulométrique la plus étroite possible. Par ailleurs, par le procédé de l'invention, on peut facilement préparer des vecteurs polymériques monodisperses. Il suffit en effet à partir d'une émulsion secondaire monodisperse de monomères polymérisables, résultant du procédé de l'invention, de déclencher in situ, la réaction de polymérisation.

Dans le domaine cosmétique, l'invention permet la préparation d'émulsions monodisperses comprenant uniquement des gouttelettes d'un diamètre supérieur à 10 μm, pratiquement exemptes de plus petites gouttelettes. De telles émulsions sont pas exemple des crèmes monodisperses translucides iridescentes ou des émulsions couvrantes à incorporer dans les shampooings.

Dans le domaine des détergents, le procédé de l'invention permet la production massive d'émulsions antimousses particulièrement efficaces du fait de l'absence de gouttelettes d'une taille inférieure à 20 μm. Dans ce domaine, le procédé de l'invention constitue un progrès technique important, puisque les procédés actuellement mis en oeuvre ne conduisent qu'à environ 50% de gouttelettes ayant une taille efficace du point de vue de l'activité anti-mousse.

Des dispersions de latex peuvent être préparées de façon avantageuse par le procédé de l'invention, et ceci en continu. Ceci est d'autant plus intéressant que les procédés connus de l'état de la technique ne permettent qu'une production par batch des dispersions de latex. La préparation de telles dispersions passe, selon l'invention, par les étapes d'émulsification de monomères polymérisables dans une phase continue, et de polymérisation.

Les propriétés lubrifiantes de divers types d'émulsions peuvent en outre être améliorées par le procédé de l'invention dans la mesure où celui-ci permet la formation d'émulsions constituée de très petites gouttelettes.

L'invention est donc également applicable au traitement des surfaces.

Dans le domaine de l'affichage à cristal liquide, l'invention permet la préparation d'émulsions calibrées de cristal liquide. Par mélange de telles émulsions monodisperses de granulométrie différente, il est possible d'optimiser les propriétés optiques de l'affichage qui sont liées à la taille des gouttelettes présentes dans l'émulsion.

On peut également citer l'application du procédé de l'invention dans le domaine des phytosanitaires et des peintures à l'eau.

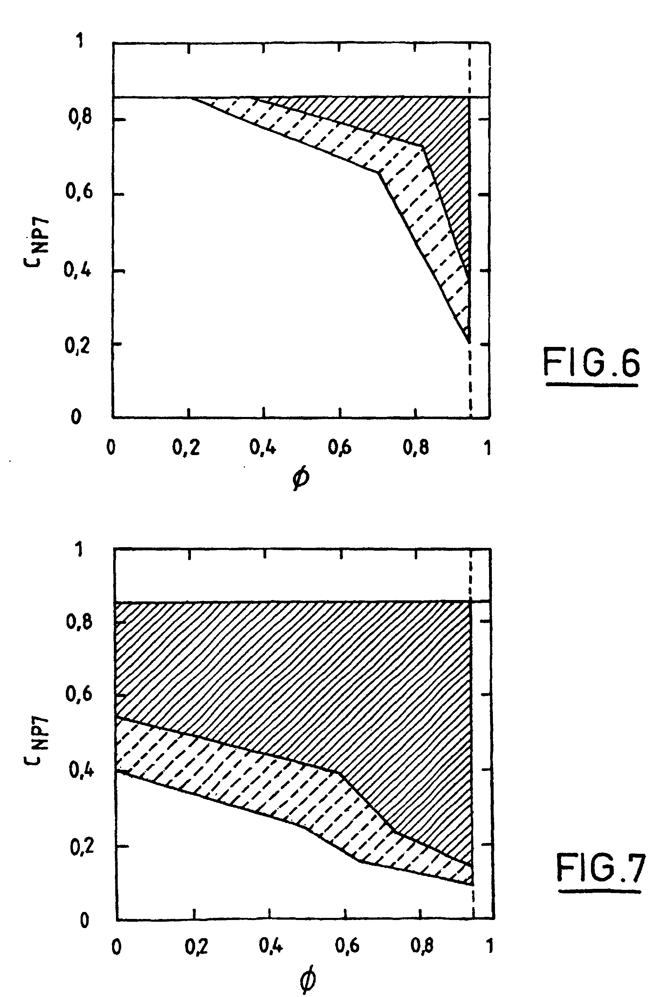

Les exemples suivants lesquels font références aux Figures 6 à 14 annexées illustrent l'invention.

Plus précisément les Figures 6 à 9 concernent les résultats d'une étude de la polydispersité d'une émulsion de polydiméthylsiloxane-dans-l'eau en fonction des variations du taux de cisaillement, de la proportion de tensioactif présent dans la phase aqueuse et de la proportion de polydiméhtylsiloxane dans l'émulsion.

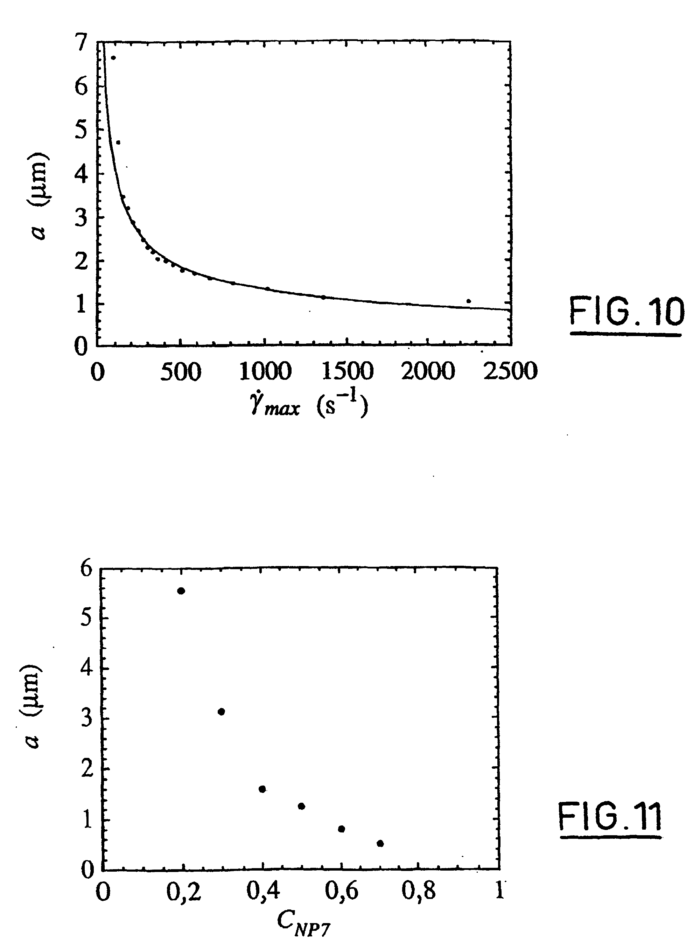

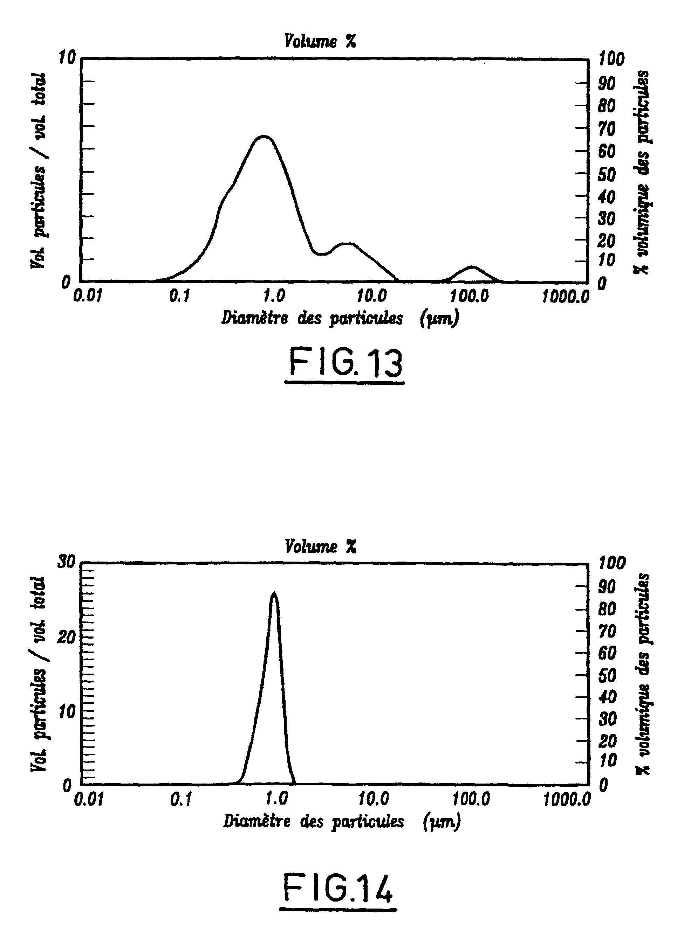

Sur les Figures 10 à 12 ont été reportés les résultats d'une seconde étude concernant l'influence de ces mêmes paramètres (taux de cisaillement, proportion de tensioactif et proportion de silicone) sur le diamètre de particules d'une émulsion monodisperse de polyméthylsiloxane-dans-l'eau. Les Figures 13 et 14 illustrent les résultats obtenus avec une émulsion huile de vaseline dans l'eau.

Pour tous les exemples le dispositif générant les contraintes de cisaillement est celui représenté à la Figure 2. Le mouvement oscillatoire de la plaque mobile est tel que le rapport de l'amplitude maximale de déformation de la plaque à la dimension de l'enceinte dans une direction perpendiculaire aux plaques est supérieur à 1. La taille des gouttelettes a été déterminée dans tous les cas par microscopie à contraste de phase et par granulométrie laser.

Les tensioactifs utilisés sont commercialisés par la Société ICI.

Le polydiméthylsiloxane utilisé dans les exemples est disponible auprès de la Société Rhône-Poulenc sous la référence Rhodorsil.

Dans les exemples 1 à 4, les gaussiennes décrivant la distribution granulométrique de l'émulsion secondaire obtenue, représentent les variations du volume occupé par la matière dispersée en fonction du diamètre des gouttelettes.

Exemple 1

Dans cet exemple, les conditions opératoires ont été fixées de façon à ce que le taux de cisaillement désigné par $\gamma$ dans la suite soit égal à 50 s$^{-1}$.

L'émulsion primaire est une émulsion polydiméthylsiloxane-dans-l'eau contenant éventuellement une certaine quantité de tergitol-NP7 en tant que tensioactif.

On a étudié la monodispersité de cette émulsion pour des concentrations variées de silicone et de tensioactif. Les résultats obtenus ont été recueillis sur la Figure 6. Les paramètres $C_{NP7}$ et $\emptyset$, portés respectivement en ordonnées et en abscisses du diagramme de la Figure 6, correspondent respectivement à la proportion massique de tensioactif dans la phase aqueuse et au pourcentage volumique de silicone dans l'émulsion totale.

Sur cette figure la partie hachurée par des traits pleins correspond à un domaine de polydispersité tel que l'écart type de la Gaussienne représentant la distribution granulométrique en volume de l'émulsion est inférieur à 10%. Dans le domaine hachuré par des traits en pointillés, l'écart type a une valeur comprise entre 10 et 20%.

Exemple 2

Le protocole opératoire est dans ce cas identique à l'exemple précédent sinon que les conditions opératoires ont été modifiées de façon à ce que le taux de cisaillement soit égal à 500 s$^{-1}$.

Les résultats obtenus ont été représentés sur la Figure 7. On notera que la partie hachurée par des traits pleins correspond à un domaine de polydispersité tel que l'écart type de la Gaussienne représentant la distribution granulométrique en volume de l'émulsion est inférieur à 10%. Dans le domaine hachuré par des traits en pointillés, l'écart type a une valeur comprise entre 10 et 20%.

Exemple 3

Le protocole opératoire est dans ce cas identique à l'exemple précédent sinon que les conditions opératoires ont été modifiées de façon à ce que le taux de cisaillement soit égal à 5000 s$^{-1}$.

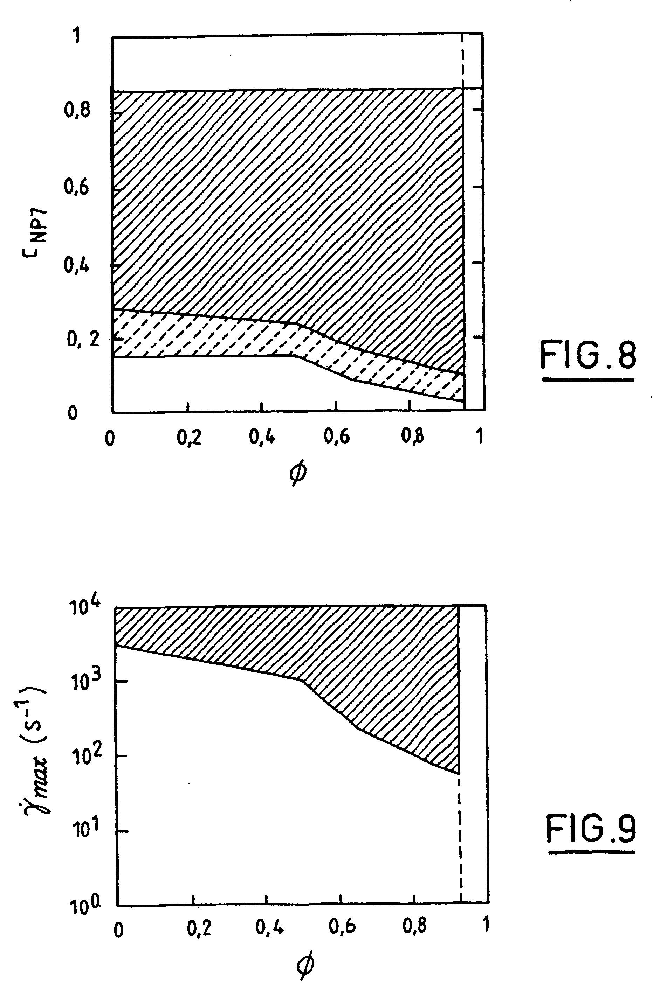

Les résultats obtenus ont été représentés sur la Figure 8. De même que pour l'exemple précédent la partie hachurée par des traits pleins correspond à un domaine de polydispersité tel que l'écart type de la Gaussienne représentant la distribution granulométrique en volume de l'émulsion est inférieur à 10%. Dans le domaine hachuré par des traits en pointillés, l'écart type a une valeur comprise entre 10 et 20%.

Exemple 4

Dans cet exemple, l'émulsion primaire est une émulsion polydiméthylsiloxane-dans-l'eau dont la phase aqueuse contient 40% en poids de tergitol-NP7 en tant que tensioactif.

La monodispersité de l'émulsion obtenue par application du procédé de l'invention a été étudiée en fonction de la valeur du taux de cisaillement $\gamma$ et de la concentration en polydiméthylsiloxane.

La Figure 9 résume les résultats obtenus. Sur cette figure $\gamma$ représente le taux de cisaillement et $\emptyset$ est tel que défini à l'exemple 1.

La partie hachurée représente un domaine où la polydispersité est telle que l'écart type de la Gaussienne représentant la distribution granulométrique en volume est inférieur à 10%.

Il résulte des exemples 1 à 4 que la zone de monodispersité est plus étendue pour des valeurs croissantes du taux de cisaillement.

En outre, l'étude réalisée montre que la monodispersité est obtenue pour les valeurs de Ø et de $C_{NP7}$ assurant la viscoélasticité de la phase continue, c'est-à-dire pour une concentration suffisante de la phase dispersée et pour une concentration suffisante du tensioactif.

Exemple 5

L'émulsion primaire traitée est celle de l'exemple 4 précédent, la proportion volumique de polydiméthylsiloxane dans l'émulsion étant fixée à 60%.

Dans cet exemple on a étudié les variations du rayon a des gouttelettes de l'émulsion finale secondaire en fonction du taux de cisaillement appliqué, dans le domaine de monodispersité.

L'ensemble des résultats obtenus est exposé Figure 10.

Cet exemple montre que la taille des gouttelettes décroît pour des valeurs croissantes du taux de cisaillement. Ainsi, il résulte de cette expérience que le taux de cisaillement permet de contrôler de façon simple la taille des gouttelettes de l'émulsion.

Exemple 6

L'émulsion primaire traitée est une émulsion polydiméthylsiloxane-dans-l'eau dont la proportion volumique de polydiméthylsiloxane dans l'émulsion a été fixée à 60%. La valeur du taux dé cisaillement a été conservée constante et égale à 1000 s$^{-1}$.

Dans cet exemple on a étudié les variations du rayon a des gouttelettes de l'émulsion finale secondaire en fonction de la proportion massique de tergitol-NP7 dans la phase aqueuse, dans le domaine de monodispersité.

L'ensemble des résultats obtenus est exposé Figure 11, $C_{NP7}$ étant tel que défini à l'exemple 1.

Cet exemple montre que la taille des gouttelettes décroît pour des valeurs croissantes de la concentration en tensioactif. De fait en augmentant la quantité de tensioactif, on augmente la viscoélasticité du milieu en jouant sur les valeurs de G' et G'', ce qui a pour effet de diminuer la taille des gouttelettes.

Exemple 7

L'émulsion primaire traitée est une émulsion polydiméthylsiloxane-dans-l'eau dont la proportion massique de tergitol-NP7 dans la phase aqueuse a été fixée à 40%.

Dans cet exemple on a étudié les variations du rayon a des gouttelettes de l'émulsion finale secondaire en fonction de la proportion volumique de polydiméthylsiloxane dans l'émulsion, dans le domaine de monodispersé.

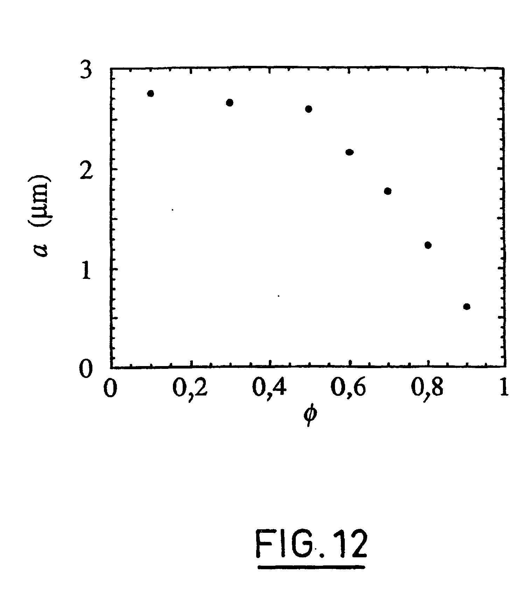

L'ensemble des résultats obtenus est exposé Figure 12, Ø étant tel que défini à l'exemple 1.

Cet exemple montre que la taille des gouttelettes décroît pour des valeurs croissantes de la concentration en phase dispersée. Là encore, on vérifie qu'en augmentant la viscoélasticité du milieu par augmentation de la concentration en phase dispersée, on observe une réduction de la taille des gouttelettes.

Exemple 8

L'émulsion primaire est un émulsion de polydiméthylsiloxane-dans-l'eau constituée de 70% en volume de polydiméthylsiloxane, à laquelle a été ajoutée 20% en poids de dextran par rapport au poids total de la phase aqueuse et 1% en poids de dodécylsulfate de sodium par rapport au poids total de la phase aqueuse. Le dextran utilisé est celui commercialisé par la société Sigma de masse moléculaire 100000.

On note qu'une quantité minimale de tensioactif est nécessaire pour éviter la coalescence des gouttelettes et assurer la stabilité de l'émulsion. En ce cas c'est l'addition de 20% en poids de dextran qui permet de contrôler la viscosélasticité de l'émulsion.

Exemple 9

L'émulsion primaire est une émulsion de Mineral Oil (Sigma)-dans-l'eau constituée de 60% en poids de l'huile de vaseline, à laquelle a été ajoutée 35% en poids de tergitol -NP7.

Le traitement est effectué dans une cellule de Couette [gap : 200 µm]. Les granulogrammes obtenus à l'aide d'un granulomètre Malvern Mastersizer sont représentés sur les Figures 13 (Premix avant cisaillement) et 14 (après cisaillement).

En abscisses sont représentés le diamètre des particules (µm) et le volume des particules (%) et en ordonnées la proportion des particules (vol/vol. total) et le % volumique des gouttelettes.

Le taux de cisaillement $\gamma$ était de 1217s$^{-1}$.

Le diamètre moyen des gouttelettes ($\delta$) est fixé à 1 µm. Le taux de polydispersité est de 23%.

**Revendications**

1. Procédé de préparation d'une émulsion secondaire monodisperse constituée de gouttelettes d'une phase A, dispersées dans une phase B, A n'étant pas miscible dans B, au départ d'une émulsion primaire polydisperse de formulation identique et constituée de gouttelettes de ladite phase A dispersées dans ladite phase B, **caractérisé en ce que**

   (1) l'émulsion primaire de départ est viscoélastique ;

(2) la phase continue de l'émulsion primaire de départ est viscoélastique ;

(3) la viscosité effective de l'émulsion primaire de départ est supérieure à la viscosité de la phase dispersée A, lesdites viscosités étant mesurées à un taux de cisaillement compris entre 10 et 100 $s^{-1}$,

(4) on soumet ladite émulsion primaire de départ à un taux de cisaillement contrôlé de telle sorte qu'un même cisaillement maximal soit appliqué à l'ensemble de l'émulsion,

le cisaillement contrôlé étant réalisé par mise en contact de ladite émulsion primaire avec une surface solide en mouvement, le gradient de vitesse **caractérisant** l'écoulement de l'émulsion étant constant dans une direction perpendiculaire à ladite surface solide en mouvement, et étant obtenu

- soit à l'aide d'une cellule constituée de deux cylindres concentriques en rotation l'un par rapport à l'autre,
- soit à l'aide d'une cellule constituée de deux plaques parallèles en mouvement oscillant l'une par rapport à l'autre,
- soit à l'aide d'une cellule constituée de deux disques concentriques en rotation l'un par rapport à l'autre

  i) étant entendu que le domaine de viscoélasticité est délimité par les équations (a) et (b) suivantes :

  (a) $1.10^{-2}$ dyne/$cm^2$($1.10^{-3}$N/$m^2$) $\leq$ ($G'^2$ + $G''^2$)$^{1/2}$ $\leq$ $1.10^8$ dyne/$cm^2$ ($1.10^7$N/$m^2$)

  (b) $G'/G'' \geq 0,01$

  où G' désigne le module élastique et G'' le module de dissipation, G' et G'' étant mesurés audit taux de cisaillement maximal ;
  ii) et étant entendu que l'émulsion monodisperse est définie par une courbe de variation donnant le volume occupé par la matière dispersée en fonction du diamètre des gouttelettes présentant un écart type inférieur ou égal à 30%.

2. Procédé selon la revendication 1 ou 2, **caractérisé en ce que** la viscosité de la phase continue B est supérieure à la viscosité de la phase dispersée A, lesdites viscosités étant mesurées à un taux de cisaillement compris entre 10 et 100$s^{-1}$.

3. Procédé selon l'une quelconque des revendications précédentes, **caractérisé en ce que** l'émulsion primaire de départ contient au moins 65 % en poids de la phase A en dispersion dans la phase B, de préférence au moins 80%.

4. Procédé selon l'une quelconque des revendications 1 et 3 **caractérisé en ce que** l'émulsion primaire de départ ne contient pas plus de 5% en poids de tensioactif.

5. Procédé selon l'une quelconque des revendications précédentes, **caractérisé en ce que** l'émulsion primaire de départ est une émulsion de type huile-dans-l'eau.

6. Procédé selon la revendication 5, **caractérisé en ce que** l'huile est une silicone, de préférence un polydiorganosiloxane dont les radicaux organiques liés au silicium sont choisis parmi des radicaux alkyle en $C_1$-$C_{16}$, phényle, vinyle et l'atome d'hydrogène.

7. Procédé selon la revendication 6, **caractérisé en ce que** la silicone est un polydiméthylsiloxane.

8. Procédé selon la revendication 1, **caractérisé en ce que** l'émulsion primaire de départ comprend un ou plusieurs tensioactifs.

9. Procédé selon l'une quelconque des revendications 5 à 8 **caractérisé en ce que** le ou les tensioactifs représentent de 20 à 40% du poids de la phase aqueuse.

10. Procédé selon l'une quelconque des revendications précédentes, **caractérisé en ce que** les gouttelettes de l'émulsion primaire de départ ont un diamètre variant entre 1 et 100 $\mu$m.

11. Procédé selon l'une quelconque des revendications précédentes, **caractérisé en ce que** la valeur maximale du taux de cisaillement est de 1 à $1.10^6 s^{-1}$, de préférence de 100 à 5000 $s^{-1}$.

12. Utilisation du procédé selon l'une quelconque des revendications précédentes pour la préparation d'une émulsion secondaire monodisperse à partir d'une émulsion primaire polydispersée.

13. Utilisation du procédé selon l'une quelconque des revendications précédentes pour la préparation d'une émulsion secondaire contenant moins de 5% en poids de tensioactif.

**Patentansprüche**

1. Verfahren zur Herstellung einer monodispersen sekundären Emulsion, die aus Tröpfchen einer Phase A besteht, die in einer Phase B dispergiert sind, wobei A nicht mischbar in B ist, ausgehend von einer polydispersen primären Emulsion mit identischer Formulierung, die aus Tröpfchen der Phase A, dispergiert in der Phase B, besteht, **dadurch gekennzeichnet, dass**

(1) die primäre Ausgangsemulsion viskoelastisch ist;
(2) die kontinuierliche Phase der primären Ausgangsemulsion viskoelastisch ist;
(3) die wirksame Viskosität der primären Ausgangsemulsion größer als die Viskosität der dispergierten Phase A ist,
wobei die Viskositäten bei einem Schergrad von 10 bis 100 $s^{-1}$ gemessen werden;
(4) man die primäre Ausgangsemulsion einer kontrollierten Scherung derart unterwirft, dass die gleiche maximale Scherung auf die gesamte Emulsion angewendet wird,

wobei die kontrollierte Scherung mittels In-Kontaktbringen der primären Emulsion mit einer sich bewegenden festen Oberfläche durchgeführt wird, wobei der Geschwindigkeitsgradient, der die Strömung der Emulsion **kennzeichnet,** in senkrechter Richtung zu der sich bewegenden festen Oberfläche konstant ist, und die erhalten wird

- entweder mithilfe einer Zelle, die aus zwei konzentrischen Zylindern besteht, die im Verhältnis zueinander rotieren,
- oder mithilfe einer Zelle, die aus zwei parallelen Platten besteht, die sich zueinander in oszillierender Bewegung befinden,
- oder mithilfe eine Zelle, die aus zwei konzentrischen Scheiben besteht, wobei die eine gegen die andere rotiert,

i) wobei die Domäne der Viskoelastizität durch die folgenden Gleichungen (a) und (b) begrenzt sein soll:

(a) $1 \cdot 10^{-2}$ dyn/cm$^2$ $(1 \cdot 10^{-3}$ N/m$^2) \leq (G'^2 + G''^2)^{\frac{1}{2}} \leq 1 \cdot 10^6$ dyn/cm$^2$ $(1 \cdot 10^7 \cdot$ N/m$^2)$

(b) $G'/G'' \geq 0,01$.

wobei G' das Elastizitätsmodul bedeutet und G'' das Dissipationsmodul bedeutet, wobei G' und G'' beim maximalen Schergrad gemessen werden;
ii) wobei die monodisperse Emulsion durch eine Variationskurve definiert sein soll, welche das durch die dispergierte Substanz eingenommene Volumen als Funktion des Durchmessers von Tröpfchen mit einer Standardabweichung von weniger oder gleich 30% angibt.

**2.** Verfahren nach Anspruch 1, **dadurch gekennzeichnet, dass** die Viskosität der kontinuierlichen Phase B höher ist als die Viskosität der dispergierten Phase A, wobei die Viskositäten bei einem Schergrad von 10 bis 100 $s^{-1}$ gemessen werden.

**3.** Verfahren nach einem der vorhergehenden Ansprüche, **dadurch gekennzeichnet, dass** die primäre Ausgangsemulsion mindestens 65 Gew.% der Phase A in Dispersion in der Phase B und vorzugsweise mindestens 80% enthält.

**4.** Verfahren nach einem der Ansprüche 1 und 3, **dadurch gekennzeichnet, dass** die primäre Ausgangsemulsion nicht mehr als 5 Gew.% Tensid enthält.

**5.** Verfahren nach einem der vorhergehenden Ansprüche, **dadurch gekennzeichnet, dass** die primäre Ausgangsemulsion eine Emulsion des Öl-in-Wasser-Typs ist.

**6.** Verfahren nach Anspruch 5, **dadurch gekennzeichnet, dass** das Öl ein Silikon, vorzugsweise Polydiorganosiloxan, ist, dessen an Silicium gebundene organische Reste ausgewählt sind aus $C_1$-$C_{16}$-Alkyl-, Phenyl-, Vinylresten und einem Wasserstoffatom.

**7.** Verfahren nach Anspruch 6, **dadurch gekennzeichnet, dass** das Silikon ein Polydimethylsiloxan ist.

**8.** Verfahren nach Anspruch 1, **dadurch gekennzeichnet, dass** die primäre Ausgangsemulsion ein oder mehrere Tenside umfasst.

**9.** Verfahren nach einem der Ansprüche 5 bis 8, **dadurch gekennzeichnet, dass** die Tenside 20 bis 40 Gew.% der wässrigen Phase ausmachen.

**10.** verfahren nach einem der vorhergehenden Ansprüche, **dadurch gekennzeichnet, dass** die Tröpfchen der primären Ausgangsemulsion einen Durchmesser zwischen 1 und 100 µm haben.

**11.** Verfahren nach einem der vorhergehenden Ansprüche, **dadurch gekennzeichnet, dass** der Maximalwert des Schergrads 1 bis $1 \cdot 10^6$ $s^{-1}$, vorzugsweise 100 bis 5000 $s^{-1}$ beträgt.

**12.** Verwendung des Verfahrens nach einem der vorhergehenden Ansprüche zur Herstellung einer monodispersen sekundären Emulsion ausgehend von einer polydispergierten primären Emulsion.

**13.** Verwendung des Verfahrens nach einem der vorhergehenden Ansprüche zur Herstellung einer sekundären Emulsion, die weniger als 5 Gew.% Tensid enthält.

## Claims

**1.** Process for preparing a monodisperse secondary emulsion consisting of droplets of a phase A, dispersed in a phase B, A being immiscible in B, starting with a polydispersed primary emulsion of identical formulation and consisting of droplets of the said phase A dispersed in the said phase B, **characterized in that**

(1) the starting primary emulsion is viscoelastic;
(2) the continuous phase of the starting primary emulsion is viscoelastic;
(3) the effective viscosity of the starting primary emulsion is higher than the viscosity of the dispersed phase A, the said viscosities being measured at a shear rate of between 10 and $100 \text{ s}^{-1}$;
(4) the said starting primary emulsion is subjected to a controlled shear rate such that the same maximum shear is applied to the entire emulsion, the controlled shear being achieved by placing the said primary emulsion in contact with a solid surface in motion, the rate gradient **characterizing** the flow of the emulsion being constant in a direction perpendicular to the said solid surface in motion, and being obtained

- either using a cell consisting of two concentric cylinders rotating relative to each other,
- or using a cell consisting of two parallel plates oscillating relative to each other,
- or using a cell consisting of two concentric discs rotating relative to each other

i) it being understood that the viscoelasticity range is delimited by equations (a) and (b) below:

(a) $1 \times 10^{-2}$ dyne/cm$^2$ ($1 \times 10^{-3}$ N/m$^2$) $\leq (G'^2 + G''^2)^{1/2} \leq 1 \times 10^8$ dyne/cm$^2$ ($1 \times 10^7$ N/m$^2$)
(b) $G'/G'' \geq 0.01$

in which G' denotes the elastic modulus and G'' the loss modulus, G' and G'' being measured at the said maximum shear rate;
ii) and it being understood that the monodisperse emulsion is defined by a variation curve giving the volume occupied by the dispersed material as a function of the diameter of the droplets with a standard deviation of less than or equal to 30%.

**2.** Process according to Claim 1 or 2, **characterized in that** the viscosity of the continuous phase B is higher than the viscosity of the dispersed phase A, the said viscosities being measured at a shear rate of between 10 and 100 s$^{-1}$.

**3.** Process according to either of the preceding claims, **characterized in that** the starting primary emulsion contains at least 65% and preferably at least 80% by weight of phase A dispersed in phase B.

**4.** Process according to either of Claims 1 and 3, **characterized in that** the starting primary emulsion contains not more than 5% by weight of surfactant.

**5.** Process according to any one of the preceding claims, **characterized in that** the starting primary emulsion is an emulsion of oil-in-water type.

**6.** Process according to Claim 5, **characterized in that** the oil is a silicone, preferably a polydiorganosiloxane in which the organic radicals linked to the silicon are chosen from $C_1$-$C_{16}$ alkyl, phenyl and vinyl radicals and a hydrogen atom.

**7.** Process according to Claim 6, **characterized in that** the silicone is a polydimethylsiloxane.

**8.** Process according to Claim 1, **characterized in that** the starting primary emulsion comprises one or more surfactants.

**9.** Process according to any one of Claims 5 to 8, **characterized in that** the surfactant(s) represent(s) from 20% to 40% of the weight of the aqueous phase.

**10.** Process according to any one of the preceding claims, **characterized in that** the droplets of the starting primary emulsion have a diameter ranging between 1 and 100 µm.

**11.** Process according to any one of the preceding claims, **characterized in that** the maximum value of the shear rate is from 1 to $1 \times 10^6$s$^{-1}$ and preferably from 100 to 5 000 s$^{-1}$.

**12.** Use of the process according to any one of the preceding claims, for the preparation of a monodisperse secondary emulsion starting with a polydispersed primary emulsion.

**13.** Use of the process according to any one of the preceding claims, for the preparation of a secondary emulsion containing less than 5% by weight of surfactant.

FIG. 1

FIG.2

FIG.3

34    33

31                    30

32    35

## FIG. 4

30

31

33

## FIG. 5

FIG.6

FIG.7

FIG.8

FIG.9

FIG.10

FIG.11

FIG. 12

FIG.13

FIG.14